# EUROPEAN PATENT SPECIFICATION

(11) **EP 4 402 044 B1**
(45) Date of publication and mention of the grant of the patent: **20.08.2025**
(21) Application number: 22826408.1
(22) Date of filing: 18.11.2022
(51) Int. Cl.: B62K 25/28

(54) **SADDLE-RIDE MOTORCYCLE OF SCOOTER TYPE WITH QUADRILATERAL REAR SUSPENSION**
SATTELMOTORRAD VOM TYP SCOOTER MIT VIERSEITIGER HINTERRADAUFHÄNGUNG
MOTOCYCLETTE À SELLE DE TYPE SCOOTER AVEC SUSPENSION ARRIÈRE QUADRILATÉRALE

(30) Priority: 18.11.2021 IT 202100029219
(43) Date of publication of application: 24.07.2024
(73) Proprietor: Piaggio & C. S.P.A., 56025 Pontedera Pisa (IT)
(72) Inventor: RAFFAELLI, Andrea, 56025 Pontedera (PI) (IT); SANTUCCI, Mario, 56025 Pontedera (PI) (IT)
(74) Representative: Mannucci, Michele
(86) International application number: PCT/IB2022/061145
(87) International publication number: WO 2023/089555

(56) References cited:
- CN-A- 113 291 402
- JP-A- 2006 015 868
- JP-A- 2013 154 859
- JP-A- H11 115 867
- JP-A- S6 430 897
- JP-U- S5 562 495
- JP-U- S59 124 785
- US-A1- 2011 272 909

## Description

### TECHNICAL FIELD

The present invention relates to the manufacture of saddle-ride vehicles. In particular, the invention relates to a motorcycle of scooter type comprising a quadrilateral rear suspension.

### STATE OF THE ART

Among the various types of motor vehicles available on the market, scooters or motor scooters are in great demand. These motorcycles stand out from others for the presence of a frame which is substantially open in the intermediate part and for a footrest which enables the motorcyclist to maintain a riding position with an erect posture and closed and parallel legs. Scooters can have two wheels or three wheels with two steering front wheels and a driving rear wheel.

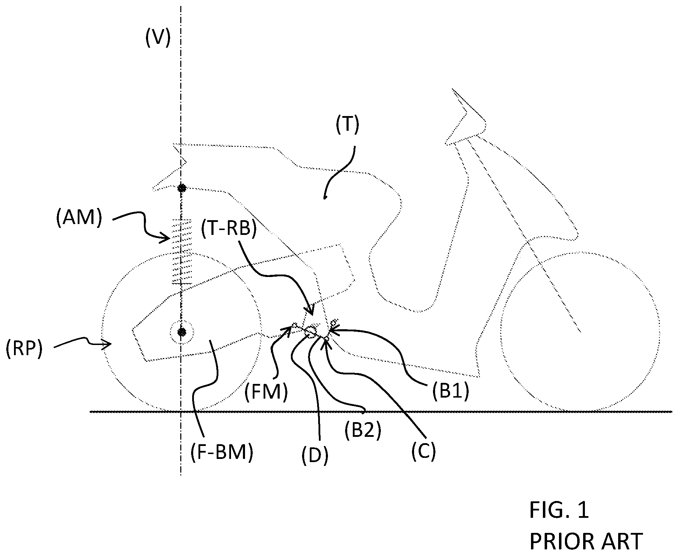

Compared to other motorcycles, a scooter also stands out by the fact that the engine block is not installed on the frame, but on the contrary is integral with the structure of the rear suspension swingarm. The swingarm-engine block assembly is hinged to the frame by means of a fulcrum so as to constitute a mass oscillating about said fulcrum as a result of loads acting on the rear suspension. In addition to the swingarm, the rear suspension typically comprises one or more spring-shock absorber assemblies interposed between the frame and the swingarm and/or between the frame and the engine block (see the layouts shown in Figures 1, 2 and 3 relating to known solutions).

Scooters are normally provided with rubber elements between the components of the rear suspension and the frame. In particular, these elements are normally provided at the ends of the spring-shock absorber assemblies and at the fulcrum about which the mass constituted by the swingarm and the engine block oscillates. In this respect, in order to limit the possible yaw movement of this mass with respect to the frame (i.e., the movement about a vertical axis), in many cases a block-holder frame is provided. This represents a sort of mechanical interface between the motorcycle frame and the oscillating mass so that the movements of the latter remain confined substantially to a horizontal plane. A known type of block-holder frame is schematically shown in the layouts shown in Figures 1 to 3 and indicated by the reference (T-RB). This comprises two connecting rods hinged together and having axes parallel to the axis of rotation of the rear wheel. A first connecting rod (B1) is hinged to the motorcycle frame, while a second connecting rod (B2) is hinged to the oscillating mass (swingarm-engine) (F-BM) at a point hereinafter referred to as engine fulcrum (FM). To avoid a displacement of the engine fulcrum (FM), at least one point (D) of one of the two connecting rods (B1, B2) is connected to the motorcycle frame by means of an element known as *silent-block,* consisting of two bushings with a rubber buffer therebetween. The two bushings, one being integral with the connecting rod and the other with the frame, can move relative to one another, temporarily losing their coaxiality in a manner depending on the size and stiffness of the rubber used. In this configuration, the instant centre of rotation of the engine block varies continuously with respect to the frame according to the stresses to which the *silent-block* is subjected.

As an alternative to or in combination with the aforementioned silent-block, two rubber elements (or rubber buffers) are provided at the pivots of the connecting rods (B1-B2) respectively hinged to the motorcycle frame and to the oscillating mass, or even at the hinge (C) between the two connecting rods (B1-B2).

As known, in addition to the vibrations generated by the engine, while the vehicle is moving the rear suspension is also subjected to other vertical and horizontal forces, generated by the contact between the rear wheel and the ground. The horizontal forces are generated by the traction and braking actions to which the motorcycle is subjected, while the vertical forces are generated by the reaction to the weight of the rear part of the vehicle and/or by the conformation of the road surface (presence of bumps or potholes) with which the rear wheel interacts.

With reference to the horizontal forces, these forces compress the rubber buffers *(silent-blocks)* of the frame-holder, thereby limiting to a certain extent the absorption by the buffers of the vibrations generated by the engine; however, this condition is accepted given the need to transfer the thrust generated by the engine to the motorcycle frame. In fact, the motorcycle is pushed forward by means of said rubber elements.

It is known that vertical thrusts can be cancelled out by properly configuring the suspension, and more precisely by arranging the spring-shock absorber assembly so that the reaction develops in the same direction as the vertical force. In fact, to achieve this condition the spring-shock absorber assembly (AM) must be installed along the vertical, or substantially vertical, direction passing through the axis of the rear wheel (RP), as schematically shown in Figure 1, in which the reference (T) indicates the motorcycle frame, while the reference (F-BM) indicates the mass oscillating about the fulcrum (F) configured by the block-holder frame (T-RB).

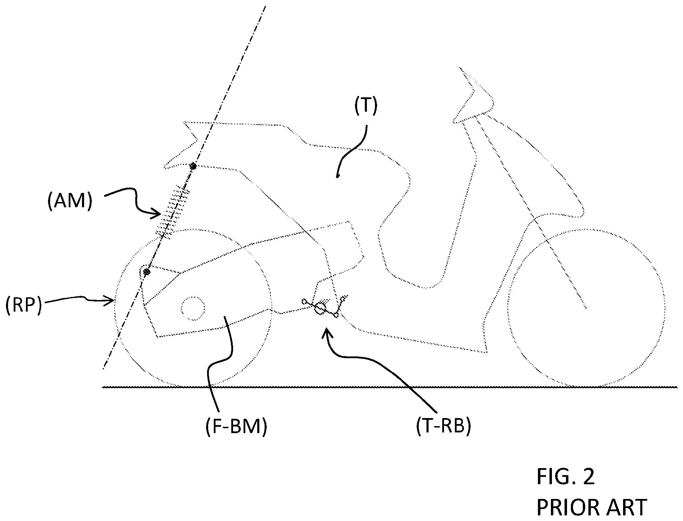

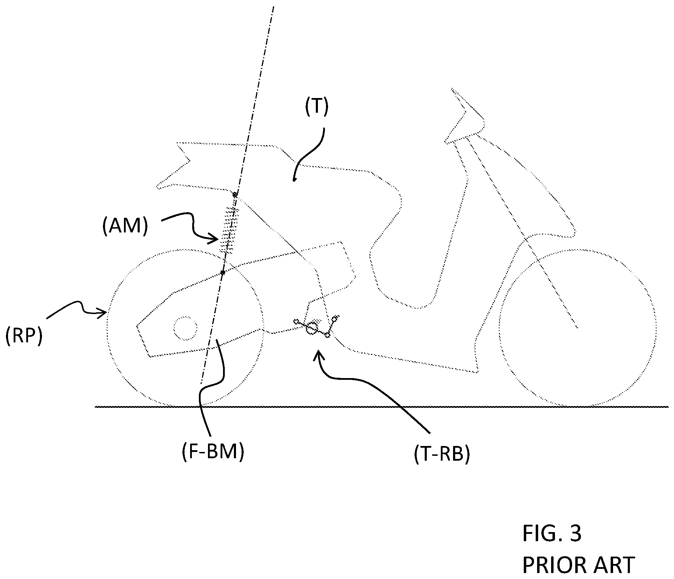

Still referring to Figure 1, in order to cancel out the vertical forces, the spring-shock absorber assembly (AM) shall therefore have a particularly set-back position, which evidently remains visible also on a lateral observation plane of the motor vehicle. Figures 2 and 3 schematically show two known solutions in which the spring-shock absorber assembly is inclined forward (Figure 2) or connected to the oscillating mass (swingarm-engine block) in a position close to the frame (Figure 3). Also in these solutions, however, the spring-shock absorber assembly remains laterally visible.

It is known, however, that for scooters on the market, it is desired to locate the spring-shock absorber assembly in a more hidden position inside the motorcycle body. However, in scooters on the market, one possibility for achieving this aim could be to modify the body so that it extends substantially up to the height of the rear wheel hub. This solution clearly appears unfeasible since it would make the aesthetics of the rear part of the motor vehicle and its maintenance more complex. Indeed, this solution would result in having always to disassemble the body in order to work on the engine and/or on the rear wheel.

In the configurations shown in Figures 2 and 3, as well as in other known configurations, the real position of the spring-shock absorber assembly (AM) thus differs from the ideal position shown schematically in Figure 1. Therefore, the reaction of the spring-shock absorber assembly (AM) is no longer aligned with the vertical force generated by the contact between wheel and ground. As a result, the rubber elements of the mechanical system are also pre-loaded vertically, thereby also transmitting stresses to the rear suspension.

The spring-shock absorber assembly (AM) is advanced towards the fulcrum of oscillation of the swingarm/engine mainly for reasons of size. In most cases, the spring-shock absorber assembly (AM) is inclined towards the front of the motorcycle so that the rubber elements, further to stresses on the rear suspension, are loaded not only vertically, but also horizontally. This obviously leads to a faster deterioration of the elements.

A known solution which aims to partially solve the aforementioned problems is described in the patent document JP2006015868.

The document CN 113 291 402 A discloses the features of the preamble of claim 1.

The Applicant has perceived the need for a new technical solution which on the one hand makes it possible to place the spring-shock absorber assembly in a hidden position, i.e., relatively advanced towards the fulcrum of oscillation of the swingarm/engine, and at the same time makes it possible to cancel out, or at least greatly limit, the vertical forces on the rubber elements of the mechanical system in order to avoid their pre-loading.

### SUMMARY

In view of the above considerations, the main task of the present invention is to provide a motorcycle that makes it possible to overcome or at least mitigate the drawbacks described above relating to the transmission of loads acting on the rear suspension to the motorcycle frame. Within this task, a first object is to provide a motorcycle in which the shock absorber is hidden or not much visible. A further object is to provide a motorcycle in which the loads acting on the rear suspension are only partially transferred to the frame. In this respect, another object is to cancel out or at least limit as much as possible the transmission to the frame of vertical loads acting on the rear suspension. Yet another object of the present invention is to provide a motorcycle that is reliable and easily manufactured at competitive costs.

The Applicant has noted that said task and said objects can be achieved by means of a saddle-ride motorcycle of scooter type, comprising a frame and a rear wheel operatively connected to the frame by means of a rear suspension comprising a swingarm which constitutes, fully or partially, a mass oscillating with respect to the frame around a first axis of rotation. According to the invention, the rear suspension comprises a first rod hinged to the frame about a second axis of rotation different from the first axis of rotation defined at an intermediate point between two ends of the first rod. The suspension also comprises a second rod hinged to the first rod about a third axis of rotation; in particular, the second rod is rotatably connected, directly or by means of the swingarm, to the pivot of the rear wheel so as to rotate about a fourth axis of rotation. The rear suspension also comprises a spring-shock absorber assembly connected, at a first end thereof, to an end of the first rod and, at a second end thereof, to the frame. According to the invention, the front end of the first rod is connected to the spring-shock absorber assembly, while the rear end of the first rod is connected to the second rod.

This motorcycle allows the spring-shock absorber assembly to be placed in a very advanced, and therefore particularly hidden, position, which improves the aesthetics of the motorcycle, preserving other advantages obtained in terms of reduced loads transferred from the suspension to the frame and to the oscillating mass.

According to a possible embodiment, in an operating condition of the rear suspension, the third axis of rotation and the fourth axis of rotation lie in a substantially vertical plane containing the axis of rotation of the rear wheel, wherein said substantially vertical plane lies within +/- 10° relative to a vertical to the ground.

According to a possible embodiment, the swingarm is connected to an engine block of the motor vehicle. In this embodiment the swingarm and the engine block are part of said oscillating mass. According to a possible embodiment, the second rod is directly hinged to the pivot of said rear wheel and is disengaged from the swingarm; in this embodiment the fourth axis of rotation coincides with the axis of rotation of the rear wheel.

According to another embodiment, the second rod is hinged to the swingarm and the fourth axis of rotation is distinct from the axis of rotation of said rear wheel.

According to one embodiment, the length of said first rod is greater than the length of the second rod.

According to one embodiment, said length of the first rod, considered along a theoretical line orthogonal to the second axis of rotation and to the third axis of rotation, substantially corresponds to the length of the oscillating mass, considered along a second theoretical line orthogonal to the first axis of rotation and to the axis of rotation of the rear wheel.

Preferably, theoretical line is substantially parallel to said second theoretical line.

In a possible embodiment, the first rod and the second rod are located above a theoretical line orthogonal to the axis of rotation of the rear wheel and to the first axis of rotation, wherein said position is considered on a lateral observation plane of the motorcycle.

According to a possible embodiment, the spring-shock absorber assembly is arranged within a body so as not to be visible when the motor vehicle is observed on a lateral observation plane. In a possible embodiment, the second rod supports a braking device configured to brake the rear wheel.

According to a possible embodiment, the swingarm comprises a first part and a second part, wherein the first part is folded inwards with respect to the second part; said first part being rigidly connected to the engine block and said second part being rotatably connected to the pivot of the rear wheel.

According to a possible embodiment, for each half-plane identified by a longitudinal plane of symmetry of the rear wheel orthogonal to its axis of rotation, the rear suspension comprises a first rod and a second rod hinged to the corresponding first rod, wherein the first rod located in one half-plane is connected to the first rod located in the other half-plane by means of at least one connecting member so that the two first rods move as a single translating body; said first rods and said second rods being arranged in a mirror-like manner with respect to the longitudinal plane of symmetry.

With reference to the embodiment just mentioned, preferably, but not exclusively, the rear suspension comprises two spring-shock absorber assemblies, each comprising a first end connected to a first rod and a second end connected to said frame, wherein said spring-shock absorber assemblies are arranged in a substantially mirrored position with respect to the longitudinal plane of symmetry.

### LIST OF THE FIGURES

Further characteristics and advantages of the invention will become more apparent from the following detailed description of some preferred, but not exclusive, embodiments of a vehicle, illustrated herein for indicating and non-limiting purposes, with the aid of the accompanying drawings, wherein:
- Figures 1, 2 and 3 are schematic views of a rear suspension of a motorcycle of scooter type of the prior art;
- Figure 4 is a schematic view of an embodiment of a suspension according to the present invention;
- Figure 5 is a schematic view of a further embodiment of a rear suspension of a vehicle according to the present invention;
- Figure 6 is a side view of the rear part of a motorcycle according to the invention comprising the rear suspension shown in Figure 5;
- Figure 7 is an axonometric view of the rear part of a motorcycle according to the invention comprising the rear suspension of Figure 5;
- Figure 8 is a view of a component assembly of the suspension of the vehicle of Figures 6 and 7.

### DETAILED DESCRIPTION

With reference to the aforementioned figures, the present invention therefore relates to a saddle-ride vehicle 1, wherein by this expression it is meant any motorbike or motorcycle having at least two wheels, i.e., at least one front wheel and at least one rear wheel. Therefore, this expression also includes three-wheeled motorcycles, having two front steering wheels and a rear driving wheel, or alternatively a front steering wheel and a pair of rear driving wheels. Hereinafter, the saddle-ride vehicle will be indicated more simply by the term motorcycle 1.

The motorcycle 1 comprises a frame 12 to which a front wheel 4 and a rear wheel 2 are operatively connected. In particular, the rear wheel 2 is connected to the frame 12 by means of a rear suspension 3 which includes a swingarm 21 integral with an engine block 100. By the term *"engine block"* it is generally meant the structure that incorporates the engine of the motorcycle 1 and/or the mechanical transmission through which the torque generated by the engine is transferred to the rear wheel. The frame 12 supports a body 13, wherein by this term it is generally meant an assembly of components that together constitute the outer protective covering of the motor vehicle 1.

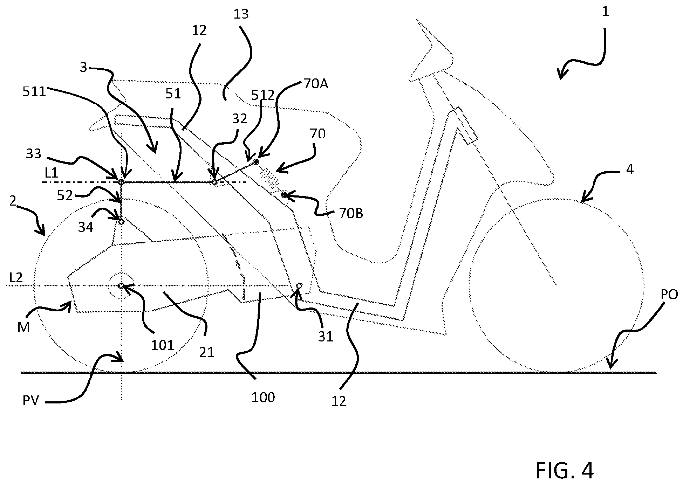

The swingarm 21 is connected to the frame 12 by means of connecting means defining a first axis of rotation 31, hereinafter also indicated by the term fulcrum 31. The swingarm 21 forms, fully or partially, an oscillating mass M which oscillates about said first axis of rotation 31. In a first embodiment, visible in the figures, the swingarm 21 is rigidly connected to the engine block 100. Therefore, in this configuration, the oscillating mass M comprises the swingarm 21 and also the engine block 100. In the layout shown in Figure 4, as well as in other layouts shown in the accompanying figures, the oscillating mass M is purposely split into two parts by a dashed line in order to identify, in a purely schematic and indicative way, the swingarm 21 and the engine block 100. In an embodiment alternative to that just described above (and not visible in the figures), the swingarm is separated from the engine block, which can, for example, be arranged inside the volume of the rear wheel rim, i.e., directly connected to the wheel hub, according to a configuration known as *"wheel hub motor".* In this case, the engine block is not part of the mass oscillating about the aforementioned fulcrum.

It should be noted, however, that the type of propulsion used to generate the driving torque is not relevant to the invention. The propulsion type can be thermal or electric. Alternatively, the propulsion can be of a hybrid type, i.e., a propulsion comprising a thermal engine and an electric motor that can operate independently or in combination according to known principles. An example of a hybrid propulsion system is shown and described in patent EP 1572486 to the same Applicant.

The oscillating mass M (whether constituted by the swingarm 21 alone or by the assembly comprising the swingarm 21 and the engine block 100) is in any case connected to the frame 12 by means of connecting means defining the first axis of rotation 31. These connecting means may consist of a single pivot or alternatively of a connecting frame, for example a block-holder frame such as that described above in connection with prior art. In any case, preferably at least one rubber element is provided to limit the transmission of the vibrations generated by the engine to the frame. In the case of a connecting frame, the rubber element can be formed by as a *"silent-block"* according to a known solution already described above.

The swingarm 21 rotatably supports the rear wheel 2 in order to allow it to rotate about an axis of rotation 101 (hereinafter indicated by the term wheel axis 101) which is located in a distal position relative to the fulcrum 31, substantially at an end of the oscillating mass M opposite the end near which the fulcrum 31 is located. At the same time, the mass M oscillates about the axis of rotation 101 with respect to the rear wheel 2.

The rear suspension 3 comprises a bar 51 (or first rod 51) hinged to the frame 12 at a second axis of rotation 32 different from the abovementioned fulcrum 31. In particular, the term *"different"* is used to indicate a condition whereby the second axis of rotation 32 is located in a position different from the fulcrum 31, wherein said position is considered on a lateral plane of the motorcycle 1 (plane of Figure 4).

The rear suspension 3 also comprises a connecting rod 52, or second rod 52, which is hinged to the first rod 51 at a third axis of rotation 33. The connecting rod 52 can be rotatably connected directly to the pivot of the rear wheel 2 at a fourth axis of rotation which (in an embodiment not illustrated) coincides with the axis of rotation 101 of the rear wheel 2. The connecting rod 52 therefore retains one rotational degree of freedom, about the pivot of the rear wheel 2, with respect to the oscillating mass M.

In particular, assuming that the motorcycle 1 is resting on a horizontal plane PO, the third axis of rotation 33 is coplanar with the axis of rotation 101 of the rear wheel 2. More precisely, the axis of rotation 101 of the rear wheel 2 and the third axis of rotation 33 (between the connecting rod 52 and the first rod 51) lie on the same vertical or substantially vertical plane PV. By the term 'substantially vertical' it is meant a plane lying within +/- 10° relative to the vertical to the ground.

The rear suspension of the motorcycle 1 also comprises a spring-shock absorber assembly 70 having the purpose of dampening the oscillation and/or slowing down the movement of the suspension (i.e., of the assembly including the wheel, the oscillating mass M, the first rod 51, the connecting rod 52) with respect to the frame 12. The spring-shock absorber assembly 70 may take on a *per se* known configuration and is operatively placed between the first rod 51 and the frame 12. More precisely, a first connecting end 70A is hinged to the first rod 51, while a second connecting end 70B, opposite the first connecting end 70A, is hinged to the frame 12 at a position different from that taken by the first axis of rotation 31 and by the second axis of rotation 32, wherein this position as well is considered from a lateral observation plane of the motorcycle 1.

As apparent from Figure 4, the suspension of the motorcycle 1 is configured as a sort of quadrilateral, wherein the first rod 51 and the oscillating mass M constitute two *"cranks"* hinged on one side to the frame 12 and on the other side to the connecting rod 52 defined above. As a result of this arrangement, the first rod 51, the spring-shock absorber assembly 70 and the frame 12 constitute a separate assembly which exchanges direct loads with the oscillating mass M in the same way as the connecting rod 52. As a result of the vertical or substantial vertical arrangement of the connecting rod 52 (mutual orientation of axes 33 and 101), the vertical component of the loads acting on the suspension is only minimally transferred to the frame 12 by means of the rubber element(s) (*silent-block*). These elements are mainly affected by the possible horizontal component of the loads.

According to a preferred embodiment, not shown, the connecting rod 52 of the rear suspension also supports a brake calliper 80 which acts on the rear wheel 2 to brake it. By the term *"brake calliper"* 80 it is generally meant the component assembly acting on a *"disc brake"* integral with the rear wheel 2 according to a widely known principle. It has been noted that this solution is particularly advantageous since the instant centre of rotation of the suspension moves towards the fulcrum 31 thereby making the behaviour of the motorcycle 1 when braking particularly stable.

The length of the first rod 51 is preferably greater than the length of the second rod 52.

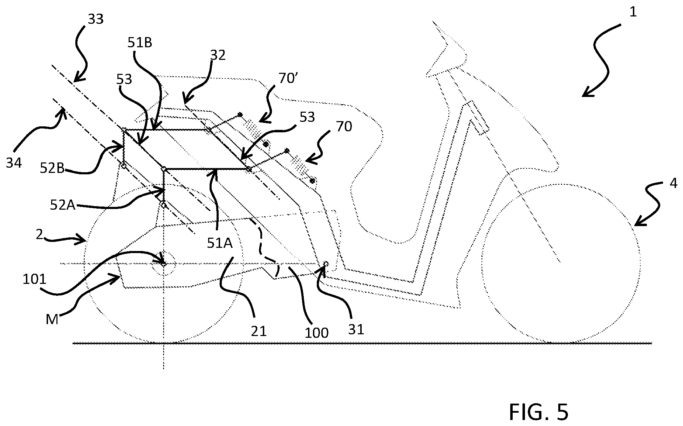

In particular, identifying a first theoretical line L1 orthogonal to the second axis of rotation 32 and to the third axis of rotation 33 and substantially parallel to a second theoretical line L2 orthogonal to the fulcrum 31 and to the wheel axis 101, the length of the first rod 51, considered along the first theoretical line L1, is equal to or smaller than the distance between the fulcrum 31 and the wheel axis 101. The length of the oscillating mass M, considered along the second theoretical line L2, instead, substantially corresponds to the distance between the wheel axis 101 and the fulcrum 31. In the suspension shown in Figure 5, the connecting rod 52 is disengaged from the oscillating mass M and can freely oscillate about the pivot of the rear wheel. The two *"cranks"* (first rod 51 and mass M) of the quadrilateral are, at least partially, substantially parallel to one another. As a result of this arrangement, the load acting on the suspension is not transmitted to the fulcrum 31 and thus to the frame 12.

Figure 4 shows a variant in which the connecting rod 52 is indirectly connected to the wheel body through the oscillating mass M. More precisely, the connecting rod 52 is hinged to the oscillating mass M at the fourth axis of rotation 34 which, in this case, is not coaxial to the wheel axis 101. Preferably, at least in one operating condition of the suspension, the fourth axis of rotation 34 and the third axis of rotation 33 may be coplanar with the wheel axis 101, even more preferably may lie in a vertical or substantially vertical plane PV passing through the wheel axis 101.

As shown in Figure 4, the fourth axis of rotation 34 oscillates integrally with the oscillating mass M and more precisely moves along a circumference concentric to the wheel axis 101. Therefore, while on the one hand the vertical loads are cancelled out, on the other hand the horizontal component of these loads is transmitted to the rubber elements (e.g., *silent block*) intended to absorb the vibrations between the oscillating mass M and the frame 12 of the motorcycle 1.

In Figure 4, the rear suspension comprises a first rod 51 hinged to the connecting rod 52 at the third axis of rotation 33 defined substantially at a first end 511 of said first rod 51. The first rod 51 is also hinged to the frame 12 through the second axis of rotation 32 defined at an intermediate point between the two ends 511, 512 of the first rod 51. According to the invention, the spring-shock absorber assembly 70 is operatively interposed between the first rod 51 and the frame 12. More precisely, in the case shown herein, a first end 70A of the spring-shock absorber assembly 70 is connected to the first rod 51 at the second end 512 thereof, while the second end 70B of the spring-shock absorber assembly 70 is hinged to the frame 12. Basically, the front end 512 of the first rod 51 is connected to the spring-shock absorber assembly 70, while the rear end 511 of the first rod 51 is connected to the second rod 52 (connecting rod 52), and the first rod 51 is hinged to the frame 12 at an intermediate point between the two ends 511,512. In this way, the jerking movement of the swingarm 21 is transmitted by the second rod 52 to the first rod 51 and from there to the spring-shock absorber assembly 70, which becomes compressed and expanded with respect to the frame 12.

In this embodiment, the spring-shock absorber assembly 70 takes up a very advanced, and therefore particularly hidden, position, other advantages in terms of reduced loads transferred to the suspension and provided by the suspension to the body in terms of stress transmission remaining the same. With this configuration, the spring-shock absorber assembly 70 is hidden inside the body 13, thereby improving its level of protection and giving the vehicle an original and distinctive aesthetic impact. Moreover, the spring-shock absorber assembly 70 discharges the forces at a point of the frame which is less subject to bending as compared to the conventional rear end thereof, as illustrated in Figures 1-3.

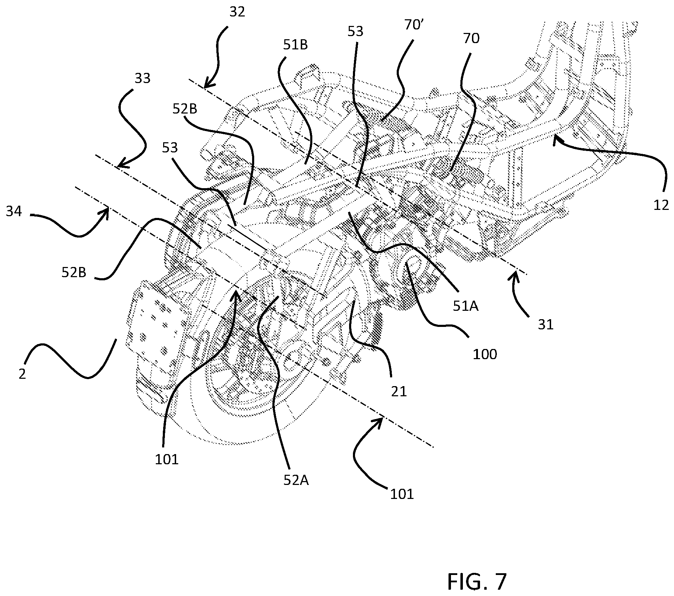

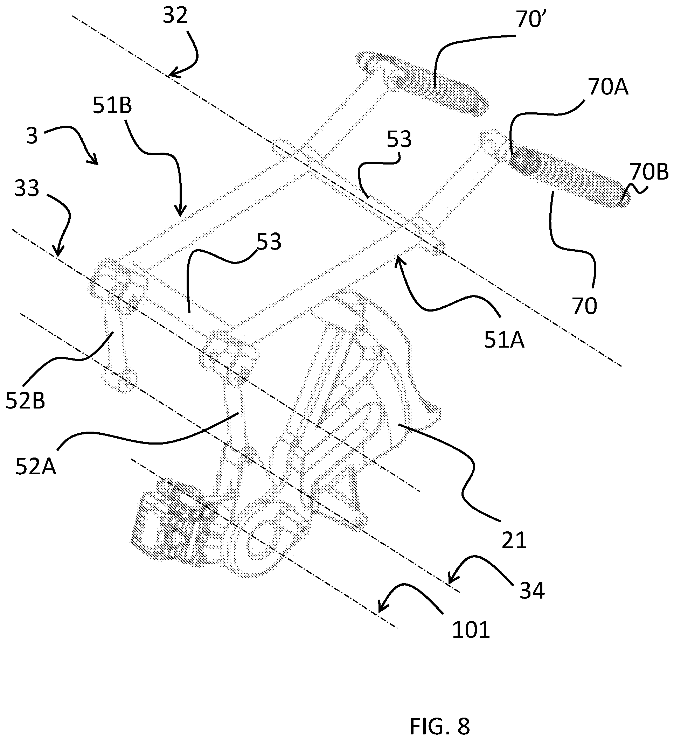

In the embodiments of the rear suspension shown in Figures 4 to 8, the connecting rod 52, the first rod 51 and the spring-shock absorber assembly 70 are located in a position above the theoretical line L2 orthogonal to the fulcrum 31 and to the wheel axis 101.

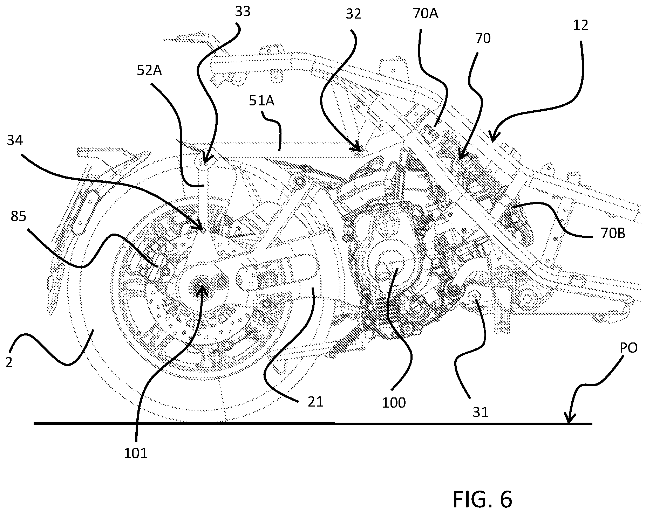

In the embodiment of the rear suspension 3 shown in Figure 4, the rear suspension has a substantially asymmetrical configuration relative to the longitudinal plane PL described above. Indeed, one or more of the suspension components are arranged on a same half-plane with respect to said longitudinal plane PL. Figures 5 to 8, on the other hand, refer to a further embodiment in which the rear suspension 3 has a substantially symmetrical configuration relative to the longitudinal plane PL. In this case, for each half-plane, the rear suspension 3 comprises a first rod 51A rigidly connected to the other first rod 51B arranged on the other half-plane. In this respect, connecting elements 53 are provided which rigidly connect the two first rods 51A, 51B so that they behave as a single translating body. In the case illustrated in Figures 6, 7, and 8, the connecting elements 53 extend in a transverse direction.

Still referring to Figures 5 to 8, for each half-plane identified by the longitudinal plane PL, the rear suspension 3 comprises a connecting rod 52A, 52B hinged to the corresponding first rod 51A, 51B. In this respect, each connecting rod 52A, 52B is hinged to the oscillating mass M according to the same principle described above in connection with Figure 4. In general, for each half-plane, the suspension shown in Figure 5 has a configuration substantially similar to that described above with reference to Figure 4.

In the embodiment shown in Figures 5 to 8, a first spring-shock absorber assembly 70 and a second spring-shock absorber assembly 70' are provided, each operatively located between the frame 12 and a corresponding first rod 51A, 51B of the rear suspension 3. In particular, in the case illustrated, a first end of each spring-shock absorber assembly 70, 70' is connected to the free end of a corresponding first rod 51A, 51B, while the second end is connected to the frame 12, according to the same principle of the layout shown in Figure 4. Indeed, each first rod 51A, 51B is hinged to the frame 12 at an intermediate point thereof, according to the same principle shown in the layout of Figure 4.

As apparent from the layouts shown in Figures 4, 5, 6, 7, and 8, in many of the embodiments described above the spring-shock absorber assembly 70 is located in a position inside the body 13 of the motor vehicle 1, wherein said position is considered on a lateral observation plane (coinciding with the observation plane of the abovementioned figures). Advantageously, the advanced position of the spring-shock absorber assembly 70, enabled by the quadrilateral suspension, allows the assembly to remain hidden inside the body 13, contrary to what happens in a traditional scooter, where the suspension is always visible from the side.

The motorcycle according to the invention fully achieves the tasks and objects previously set out. In particular, the quadrilateral configuration of the suspension eliminates, or at least greatly reduces, the transmission to the frame of the loads acting on the rear suspension when using the motorcycle.

## Claims

1. A saddle-ride motorcycle (1) of scooter type, comprising a frame (12) and a rear wheel (2) operatively connected to said frame (12) by means of a rear suspension (3) that comprises a swingarm (21) which is part of a mass (M) oscillating about a first axis of rotation (31) wherein said rear suspension (3) comprises:
- a first rod (51) hinged to said frame (12) about a second axis of rotation (32) different from said first axis of rotation (31) and defined at an intermediate point between the ends (511, 512) of the first rod (51);
- a second rod (52) hinged to said first rod (51) about a third axis of rotation (33), wherein said second rod (52) is rotatably connected, directly or through said swingarm (21), to the pivot of said rear wheel (2), so as to rotate about a fourth axis of rotation (34);
- at least one spring-shock absorber assembly (70) connected, at a first end thereof (70A), to an end (512) of said first rod (51) and, at a second end thereof (70B), to said frame (12);
**characterised in that** the front end (512) of the first rod (51) is connected to the spring-shock absorber assembly (70), while the rear end (511) of the first rod (51) is connected to the second rod (52).

2. Motorcycle (1) according to claim 1, wherein, in at least one operating condition of the rear suspension, said third axis of rotation (33) and said fourth axis of rotation (34) lie on a substantially vertical plane containing the axis of rotation (101) of said rear wheel (2), wherein said substantially vertical plane lies within +/- 10° relative to a vertical to the ground.

3. Motorcycle (1) according to claim 1 or 2, wherein said swingarm (21) is connected to an engine block (100) and wherein said swingarm (21) and said engine block (100) constitute said oscillating mass (M).

4. Motorcycle (1) according to any of the claims 1 to 3, wherein said second rod (52) is directly hinged to said pivot of said rear wheel (2) and is disengaged from said swingarm (21), said fourth axis of rotation (34) coinciding with the axis of rotation (101) of said rear wheel (2).

5. Motorcycle (1) according to any of the claims 1 to 3, wherein said second rod (52) is hinged to said swingarm (21) and wherein said fourth axis of rotation (34) is distinct from said axis of rotation (101) of said rear wheel (2).

6. Motorcycle (1) according to any of the previous claims, wherein the length of the first rod (51) is greater than the length of second rod (52).

7. Motorcycle (1) according to any of the previous claims, wherein the length of said first rod (51), considered along a theoretical line (L1) orthogonal to said second axis of rotation (32) and said third axis of rotation (33) is equal to or smaller than the length of said oscillating mass (M) considered along a second theoretical line (L2) orthogonal to said first axis of rotation (31) and said axis of rotation (101) of said rear wheel (2).

8. Motorcycle (1) according to claim 7, wherein said theoretical line (L1) is substantially parallel to said second theoretical line (L2).

9. Motorcycle (1) according to any of the claims 1-6, wherein said first rod (51) and said second rod (52) are located above a theoretical line (L2) orthogonal to the axis of rotation (101) of said rear wheel (2) and to said first axis of rotation (31), wherein said position is considered on a lateral observation plane of said motorcycle (1).

10. Motorcycle (1) according to any of the previous claims, wherein said spring-shock absorber assembly (70) is arranged within a body (13) of said motorcycle (1) in such a way that it is not visible when observing said motorcycle (1) from a lateral position.

11. Motorcycle (1) according to any of the previous claims, wherein said second rod (52) supports a braking device (85) configured to brake said rear wheel (2).

12. Motorcycle (1) according to any of the previous claims, wherein, for each half-plane identified by a longitudinal plane of symmetry (PL) of said rear wheel (2) orthogonal to its axis of rotation (101), said rear suspension (3) comprises a first rod (51A, 51B) and a second rod (52A, 52B) hinged to the corresponding first rod (51A, 51B), wherein the first rod (51A) located in one half-plane is connected to the first rod (51B) located in the other half-plane by means of at least one connecting member (53) so that the two first rods (51A, 51B) move as a single translating body, said first rods (51A, 51B) and said second rods (52A, 52B) being arranged in a mirror-like manner with respect to said longitudinal plane of symmetry (PL).

13. Motorcycle (1) according to claim 12, wherein said rear suspension (3) comprises two spring-shock absorber assemblies (70, 70') each comprising a first end connected to a first rod (51A, 51B) and a second end connected to said frame (12), wherein said spring-shock absorber assemblies (70, 70') are arranged in a substantially mirrored position with respect to said longitudinal plane of symmetry (PL).

## Patentansprüche

1. Sattel-Motorrad (1) vom Scooter-Typ mit einem Rahmen (12) und einem Hinterrad (2), das betriebsmäßig mit dem Rahmen (12) mittels einer hinteren Aufhängung (3) verbunden ist, die einen Schwenkarm (21) aufweist, der Teil einer Masse (M) ist, die um eine erste Drehachse schwingt,
wobei die hintere Aufhängung (3) aufweist:
- einen ersten Stab (51), der an dem Rahmen (12) um eine zweite Drehachse (32) angelenkt ist, die sich von der ersten Drehachse (31) unterscheidet und einen Zwischenpunkt zwischen den Enden (511, 512) des ersten Stabs (51) definiert,
- einen zweiten Stab (52), der an den ersten Stab (51) um eine dritte Drehachse (33) angelenkt ist, wobei der zweite Stab (52) drehbar, direkt oder durch den Schwenkarm (21), mit dem Drehpunkt des hinteren Rades (2) verbunden ist, um so um eine vierte Drehachse (34) zu drehen,
- wobei mindestens eine Feder-Stoßdämpferanordnung (70) an ihrem ersten Ende (70A) mit einem Ende (512) des ersten Stabes (51) und an ihrem zweiten Ende (70B) mit dem Rahmen (12) verbunden ist, **dadurch gekennzeichnet, dass** das vordere Ende (512) des ersten Stabes (51) mit der Feder-Stoßdämpferanordnung (70) verbunden ist, während das hintere Ende (511) des ersten Stabes (51) mit dem zweiten Stab (52) verbunden ist.

2. Motorrad (1) nach Anspruch 1, wobei in mindestens einem Betriebszustand der hinteren Aufhängung die dritte Drehachse (33) und die vierte Drehachse (34) auf einer im Wesentlichen vertikalen Ebene liegen, die die Drehachse (101) des hinteren Rades (2) enthält, wobei die im Wesentlichen vertikale Ebene innerhalb von+/+ 10° relativ zu einer Vertikalen zum Untergrund liegt.

3. Motorrad (1) nach Anspruch 1 oder 2, wobei der Schwenkarm (21) mit einem Motorblock (100) verbunden ist und der Schwenkarm (21) und der Motorblock (100) die schwingende Masse (M) bilden.

4. Motorrad (1) nach einem der Ansprüche 1 bis 3, wobei der zweite Stab (52) direkt mit dem Schwenkpunkt des Hinterrades (2) verbunden ist und von dem Schwenkarm (21) gelöst ist, wobei die vierte Drehachse (34) mit der Drehachse (101) des Hinterrades (2) übereinstimmt.

5. Motorrad (1) nach einem der Ansprüche 1 bis 3, wobei der zweite Stab (52) an dem Schwenkarm (21) angelenkt ist und wobei die vierte Drehachse (34) sich von der Drehachse (101) des Hinterrades (2) unterscheidet.

6. Motorrad (1) nach einem der vorstehenden Ansprüche, wobei die Länge des ersten Stabes (51) größer ist als die Länge des zweiten Stabes (52).

7. Motorrad (1) nach einem der vorstehenden Ansprüche, wobei die Länge des ersten Stabes (51) unter Berücksichtigung einer theoretischen Linie (L1), die orthogonal zu der zweiten Drehachse (32) und der dritten Drehachse (33) ist, gleich oder kleiner als die Länge der schwingenden Masse (M) ist, die entlang einer zweiten theoretischen Linie (L2) berücksichtigt wird, die orthogonal zu der ersten Drehachse (31) und der Drehachse (101) des Hinterrades (2) ist.

8. Motorrad nach Anspruch 7, wobei die theoretische Linie (L1) im Wesentlichen parallel zu der zweiten theoretischen Linie (L2) ist.

9. Motorrad (1) nach einem der Ansprüche 1-6, wobei der erste Stab (51) und der zweite Stab (52) oberhalb einer theoretischen Linie (L2) angeordnet sind, die orthogonal zu der Drehachse (101) des Hinterrades (2) und der ersten Drehachse (31) ist, wobei die Position als eine seitliche Beobachtungsebene des Motorrades (1) angesehen wird.

10. Motorrad (1) nach einem der vorstehenden Ansprüche, wobei die Feder-Stoßdämpferanordnung (70) innerhalb eines Körpers (13) des Motorrades (1) so angeordnet ist, dass sie nicht sichtbar ist, wenn das Motorrad (1) aus einer seitlichen Position betrachtet wird.

11. Motorrad (1) nach einem der vorstehenden Ansprüche, wobei der zweite Stab (52) eine Bremsvorrichtung (85) trägt, die ausgebildet ist, um das Hinterrad (2) zu bremsen.

12. Motorrad (1) nach einem der vorstehenden Ansprüche, wobei für jede Halbebene, die durch eine längliche Symmetrieebene (PL) des Hinterrad (2) identifiziert ist, die orthogonal zu seiner Drehachse (101) ist, die hintere Aufhängung (3) einen ersten Stab (51A, 51B) und einen zweiten Stab (52A, 52B) aufweist, der mit dem entsprechenden ersten Stab (51A, 51B) verbunden ist, wobei der erste Stab (51A), der in einer Halbebene angeordnet ist, mit dem ersten Stab (51B) verbunden ist, der in der anderen Halbebene angeordnet ist, und zwar mittels mindestens einem Verbindungselement (53), sodass die beiden ersten Stäbe (51A, 51B) als ein einzelner Bewegungskörper sich bewegen, wobei die ersten Stäbe (51A, 51B) und die zweiten Stäbe (52A, 52B) in einer spiegelartigen Weise mit Bezug auf die längliche Symmetrieebene (PL) angeordnet sind.

13. Motorrad nach Anspruch 12, wobei die hintere Aufhängung (3) zwei Feder-Stoßdämpferanordnungen (70, 70') aufweist, die jeweils ein erstes Ende aufweisen, das mit einem ersten Stab (51A, 51B) verbunden ist, und ein zweites Ende, das mit dem Rahmen (12) verbunden ist, wobei die Feder-Stoßdämpferanordnungen (70, 70') in einer im Wesentlichen gespiegelten Position mit Bezug auf die längliche Symmetrieebene (PL) angeordnet sind.

## Revendications

1. Motocyclette (1) à selle, du type scooter, comprenant un cadre (12) et une roue arrière (2) connectée de manière opérationnelle audit cadre (12) au moyen d'une suspension arrière (3) qui comprend un bras pivotant (21) qui fait partie d'une masse (M) oscillant autour d'un premier axe de rotation (3) dans lequel ladite suspension arrière (3) comprend
- une première tige (51) articulée audit cadre (12) autour d'un deuxième axe de rotation (32) différent dudit premier axe de rotation (31) et définie à un point intermédiaire entre les extrémités (511, 512) de la première tige (51) ;
- une deuxième tige (52) articulée à ladite première tige (51) autour d'un troisième axe de rotation (33), ladite deuxième tige (52) étant connectée en étant tournante, directement ou par l'intermédiaire dudit bras pivotant (21), au pivot de ladite roue arrière (2), de façon à tourner autour d'un quatrième axe de rotation (34) ;
- au moins un ensemble d'absorption des chocs à ressort (70) connecté, à sa première extrémité (70A), à une extrémité (512) de ladite première tige (51) et, à sa deuxième extrémité (70B) audit cadre (12) ;
**caractérisée en ce que**
l'extrémité avant (512) de la première tige (51) est connectée à l'ensemble d'absorption des chocs à ressort (70), tandis que l'extrémité arrière (511) de la première tige (51) est connectée à la deuxième tige (52).

2. Motocyclette (1) selon la revendication 1, dans laquelle, dans au moins un état de fonctionnement de la suspension arrière, ledit troisième axe de rotation (33) et ledit quatrième axe de rotation (34) se trouvent sur un plan sensiblement vertical contenant l'axe de rotation (101) de ladite roue arrière (2), ledit plan sensiblement vertical faisant un angle de +/- 10 degrés par rapport à la verticale.

3. Motocyclette (1) selon la revendication 1 ou 2, dans laquelle ledit bras pivotant (21) est connecté à un bloc moteur (100) et dans lequel ledit bras pivotant (21) et ledit bloc moteur (100) constituent ladite masse oscillante (M).

4. Motocyclette (1) selon l'une quelconque des revendications 1 à 3, dans laquelle ladite deuxième tige (52) est directement articulée audit pivot de ladite roue arrière (2) et est dégagée dudit bras de pivotement (21), ledit quatrième axe de rotation (34) coïncidant avec l'axe de rotation (101) de ladite roue arrière (2).

5. Motocyclette (1) selon l'une quelconque des revendications 1 à 3, dans laquelle ladite deuxième tige (52) est articulée audit bras pivotant (21) et dans laquelle ledit quatrième axe de rotation (34) est distinct dudit axe de rotation (101) de ladite roue arrière (2).

6. Motocyclette (1) selon l'une quelconque des revendications précédentes, dans laquelle la longueur de la première tige (51) est supérieure à la longueur de la deuxième tige (52).

7. Motocyclette (1) selon l'une quelconque des revendications précédentes, dans laquelle la longueur de ladite première tige (51), considérée le long d'une ligne théorique (L1) perpendiculaire audit deuxième axe de rotation (32) et audit troisième axe de rotation (33) est inférieure ou égale à la longueur de ladite masse oscillante (M) considérée le long d'une deuxième ligne théorique (L2) perpendiculaire audit premier axe de rotation (31) et audit axe de rotation (101) de ladite roue arrière (2).

8. Motocyclette (1) selon la revendication 7, dans laquelle ladite théorique (L1) est sensiblement parallèle à ladite deuxième ligne théorique (L2).

9. Motocyclette (1) selon l'une quelconque des revendications 1 à 6, dans laquelle lesdites première tige (51) et deuxième tige (52) sont situées au-dessus d'une ligne théorique (L2) perpendiculaire à l'axe de rotation (101) de ladite roue arrière (2) et audit premier axe de rotation (31) et dans laquelle ladite position est considérée sur un plan d'observation latérale de ladite motocyclette (1).

10. Motocyclette (1) selon l'une quelconque des revendications précédentes, dans laquelle ledit ensemble d'absorption des chocs à ressort (70) est agencé à l'intérieur d'un corps (13) de ladite motocyclette (1) de telle manière qu'il ne soit pas visible lorsque l'on observe ladite motocyclette (1) depuis une position latérale.

11. Motocyclette (1) selon l'une quelconque des revendications précédentes, dans laquelle ladite deuxième tige (52) support un dispositif de freinage (85) configuré pour freiner ladite roue arrière (2).

12. Motocyclette (1) selon l'une quelconque des revendications précédentes, dans laquelle, pour chaque demi-plan identifié par un plan longitudinal de symétrie (PL) de ladite roue arrière (2) perpendiculaire à son axe de rotation (101), ladite suspension arrière (3) comprend une première tige (51A, 51B) et une deuxième tige (52A, 52B) articulée à la première tige correspondante (51A, 51B), la première tige (51A) située dans un demi-plan étant connecté à la première tige (51B) située dans l'autre demi-plan au moyen d'au moins un organe de connexion (53), de sorte que les deux premières tiges (51A, 51B) se déplacent comme un unique corps de translation, lesdites premières tiges (51A, 51B) et lesdites deuxièmes tiges (52A, 52B) étant agencées de manière spéculaire par rapport audit plan longitudinal de symétrie (PL).

13. Motocyclette (1) selon la revendication 12, dans laquelle ladite suspension arrière (3) comprend deux ensembles d'absorption des chocs à ressort (70, 70'), chacun comprenant une première extrémité connectée à une première tige (51A, 51B) et une deuxième extrémité connectée audit cadre (12), lesdits ensembles d'absorption des chocs à ressort (70, 70') étant agencés dans une position avec une symétrie spéculaire par rapport audit plan longitudinal de symétrie (PL).
